# EUROPEAN PATENT SPECIFICATION

(11) **EP 2 988 915 B1**
(45) Date of publication and mention of the grant of the patent: **05.06.2019**
(21) Application number: 14720119.8
(22) Date of filing: 28.04.2014
(51) Int. Cl.: B29C 43/46, B29C 43/50, B29C 43/22, B29C 33/04

(54) **METHOD AND DEVICE FOR PRODUCING A PLASTICS BAND WITH PROJECTIONS, AND A PLASTICS BAND THUS PRODUCED**
VERFAHREN UND VORRICHTUNG ZUR HERSTELLUNG EINES KUNSTSTOFF-BANDES MIT VORSPRÜNGEN UND SO HERGESTELLTES KUNSTSTOFF-BAND
PROCÉDÉ ET DISPOSITIF POUR PRODUIRE UNE BANDE EN MATIÈRE PLASTIQUE AVEC DES SAILLIES, ET BANDE EN MATIÈRE PLASTIQUE AINSI PRODUITE

(30) Priority: 26.04.2013 BE 201300292
(43) Date of publication of application: 02.03.2016
(73) Proprietor: Darvan Invest N.V., 8850 Ardooie (BE)
(72) Inventor: DENEIRE, Michel, B-8850 Ardooie (BE)
(74) Representative: DenK iP
(86) International application number: PCT/EP2014/058556
(87) International publication number: WO 2014/174110

(56) References cited:
- EP-A1- 1 640 133
- GB-A- 188 463
- US-A- 3 089 191
- US-A- 5 411 390
- US-A- 6 083 352
- US-A1- 2009 053 353

## Description

### Field of the invention

The invention relates to a method and device for producing a plastics band with projections transversely to its surface, as well as to the plastics band which is thus obtained. More specifically, the invention relates to a continuous process for the extrusion of such a band, wherein the desired projections are provided directly after the extrusion step, and to an apparatus for performing such a method.

### Background of the invention

A continuous extrusion process of this type is known from EP0267193 for the production of a fastener band with hook-like projections (such as for instance Velcro® band). Following the extrusion, the band is led between a pair of interacting cooled rollers. In the surface of one of the rollers, the forming roller, suitable hook-shaped depressions or recesses are made. The plastic (a soft plastic such as nylon or polypropylene) is pressed therein between the rollers for the formation of the hook-shaped projections. The band which has thus been treated travels onward over the surface of the forming roller until the roller has sufficiently cooled the band. Next, the band equipped on one side with projections is pulled off from the forming roller. The projections are thus hereupon released from the recesses. Owing to the hook shape of the projections, this process is only possible, however, for relatively soft and bendable thermoplastic plastics. US3089191 relates to a similar process for, for example, bands made of PVC or polyethylene with an added softener.

It is also known to equip plastics plates or sheets with projections along one side in a discontinuous process by, for example, injection moulding or by hot compression moulding. However, this is generally a slow process which, moreover, often absorbs more energy.

US2009/0053353 discloses a device for forming optical lenses by roll pressing. This process, however, does not allow to obtain a plastic band which has a projection at one side, but does nevertheless not have a deformation at the other side.

GB188463 discloses a rotary rubber-dough moulding machine in which rubber dough is fed in between a pair of peripherally contacting mould rollers. One of the mould rollers is recessed at spaced intervals around its circumference for the reception of a plurality of radially arranged plunger moulds, each fitted with a spring, gear wheel and a bearing top. A fixed cam of irregular shape is provided in a suitable position for the bearing tops of the plunger moulds to work against as they are carried around with the mould roller, and which cam serves to project said plunger moulds outwards against the action of the spring after passing the point of contact of the mould rollers and eject the rubber mouldings at the lower part of the machine.

### Summary of the invention

It is an object of embodiments of the present invention to provide a good method and device for manufacturing in a continuous manner a plastics band having a plurality of projections transversely to its surface.

The objective of the invention is achieved by the method according to the appended claim 1 and the device according to the appended claim 7. Preferred embodiments of the invention are defined in the dependent claims.

It is an advantage of particular embodiments of the present invention that, in a continuous process, plastics bands can be produced with projections from plastics material harder than polyethylene (PE), further also referred to as "harder plastics". Harder plastics in the context of the present invention have a Young's modulus (modulus of elasticity) higher than 2.10⁹ N/m². Examples of harder plastics are polycarbonate, polystyrene and acetal. The harder plastics used in embodiments of the present invention may for example consist of, or comprise mainly (e.g. for more than 80% of its volume, for instance more than 90% or its volume) polycarbonate, and/or polystyrene.

It is an advantage of particular embodiments of the present invention that such plastics bands can be produced on which, moreover, the fitted projections shall later be able to be precisely joined with their top faces, to another plastics substrate by, for example, ultrasonic welding. A complementary strip or sheet may then sometimes be able to be intercalated between this substrate and the plastics band, for example a plastics strip which has difficulty attaching to the harder base material of the said plastics band. In this strip, appropriate openings may therefore then be provided opposite the said projections, in which openings the projections can accurately engage and penetrate to that surface of the substrate which is to be joined thereto. Such a layered structure of band with strip and substrate is described in EP 1008459 for use in a multi-page passport booklet. More precisely, EP 1008459 describes the connection process on the basis of a plastics band having a preformed strip with openings and substrate. The major problem remains, however, to provide in a continuous and easy manner, for use in, for example, the said passport booklets, a plastics band made of the harder plastic and having the very precise projections with a tolerance below 0.01 mm, for instance between 5 and 10 µm, as a suitable intermediate product for the purpose of an easy and accurate subsequent connection to the strip and the substrate.

It is an advantage of embodiments of the plastics band according to the invention that, simultaneously with the formation of the projections on one flat side of the band, the top side of this band remains perfectly even and flat.

It is additionally advantageous that the plastics band according to embodiments of the present invention can be expediently marked for the realization of an easy positioning for the purpose of a subsequent correct mechanical joining to other material layers, sheets, substrates, preferably in a continuous process.

It is also an advantage of embodiments of the present invention to enable to provide a plastics band made of harder plastic, which bears projections on both flat sides.

Methods according to embodiments of the present invention for the continuous production, more specifically for the extrusion of a plastics band and for the following continuous application of a precise relief of plastics projections to one or both flat sides of the band, surprisingly provide at least some of the above advantages by the use of the following steps.

After the extrusion of the molten plastic through a suitable extrusion gap, the freshly extruded band is fed through between a pair of interacting and cooled revolving elements. A first revolving element here possesses suitable recesses in its surface, at the location of the projections to be fitted on the flat side of the plastics band. The still soft plastic of the freshly extruded band between the revolving elements can thus penetrate into these recesses and fill them as required. Downstream of the thus filled recesses, the cooled revolving elements compress the extruded band transversely to their side faces. They hereupon fill the recesses in a further appropriate manner for the realization of the final form of the projections with the desired precise relief. According to a general aspect of the invention, and in particular e.g. if the invention is used to apply the relief to just one flat side, the procedure is as follows. During the rotation of the freshly extruded band between the revolving elements, the depth of the recesses in the first revolving element will gradually increase from the starting point of the compression zone between the revolving elements to just past the press nip of the through-running, freshly extruded plastics band with the (second) counterpressure revolving element. This has the very positive result that the still soft plastics face, after the extrusion, can penetrate into the successive recesses in a very gradual and controlled manner. This guarantees still better that the top side of the extruded band with projections (thus the side opposite to the one with the projections) remains then completely flat and even.

The method thus enables to produce a really unique plastics band with precise projections on one side and at the same time a perfectly controlled flat back side. This unique feature is an additional advantage for security applications such as e.g. in passports where extra anti-counterfeiting features (such as a controlled flat back side) are always welcome.

After this, the plastics band which is thus formed, in contact with at least the first rotating cooled revolving element, is led onward and cooled sufficiently to form a rigid band. According to an additional facultative characteristic of the invention, care can hereinafter be taken to ensure that the depth of the said recesses decreases appropriately, so that the formed and cooled projections from the surface, in particular the projection islands, of the at least first revolving element can be ejected correctly and intact for the removal of the cooled band having the precisely desired final form. Finally, if need be, the plastics band which is thus obtained, is cut off, e.g. close to its longitudinal margins, in the direction of extrusion.

In a first aspect, the present invention provides a method for extruding a plastics band through an extrusion gap and for next continuously applying a precise relief of plastics projections in at least one flat side of the band, comprising the steps:
- feeding-through of a still soft plastic material in the form of a freshly extruded band between a pair of interacting and cooled revolving elements comprising a first and a second revolving element, whereof at least the first revolving element, at a location of the projections to be provided on the at least one said flat side, possesses suitable recesses in its surface, wherein the still soft plastic material of the through-running freshly extruded band can penetrate into these recesses and can fill them;
- wherein, downstream of the thus filled recesses, the revolving elements further transversely compress the extruded band in order to obtain the plastics band having a desired final form with a relief, preferably a precise relief, of the projections;
- wherein the formed plastics band is subsequently led onward and cooled,
- and wherein a free space above punches in the recesses in the revolving element(s) gradually increases from zero, with the onward rotation thereof from a starting point of a compression zone between the revolving elements to an end point just past the press nip of the through-running extruded band by movement of the punches in the recesses, so that the still soft plastic can there penetrate in a controlled manner into the recesses.

It is an advantage of supplying a continuous stream of heated, still soft plastics material, e.g. by means of a heat extrusion head, in the form of an elongated strip, because it allows the formation of an elongated plastics band, in a continuous process. It is to be noted that in fact several processes occur simultaneously: receiving the still soft plastics material, forming the projections, and cooling the band; but they occur at different places of the band, and hence can be described as occurring one after another, as seen from a particular location on the plastics band.

In a method according to embodiments of the present invention, downstream of the filled recesses, the free space above the punches in the said recesses may gradually decrease upon the further rotation of the revolving elements for a correct ejection of the formed projections from the surface of the revolving element(s) for the removal of the band having the desired final form. It was surprisingly found that by gradually increasing the free space above the punch in the recess, rather than providing the maximum space of the free space above the punch in the recess at once, offers a better qualitative result in terms of improved tolerances, less defects and improved flatness at the side of the band opposite to the side where the projection is provided.

In a second aspect, the present invention provides a method for extruding a plastics band through an extrusion gap and for next continuously applying a relief according to embodiments of the first aspect, for instance a precise relief with a tolerance below 0.01 mm, for instance between 5 and 10 µm, of plastics projections in at least one flat side of the band. A method according to embodiments of the first aspect comprises furthermore:
- downstream of the filled recesses, gradually decreasing the free space above the punches in the recesses upon the further rotation of the revolving elements for a correct ejection of the formed projections from the surface of the revolving element(s) for the removal of the band having the desired final form.

In a method according to embodiments of the first aspect of the present invention, during extrusion, identification means for the band may be added to the still soft plastics material. The identification means can e.g. be provided by means of co-extrusion of a second strip, preferably arranged in such a manner that it will be completely surrounded by the deformable plastics materials mentioned above. The co-extrusion may be continuous or not, and one or more (traceable) means of identification for the plastics band can be added (in a metered manner) to the plastics melt.

In a method according to embodiments of the first aspect of the present invention, the recesses may be appropriately vented during the formation of the said projections.

Appropriate venting can e.g. be achieved by choosing appropriate tolerances between the recess and the pressing punch, but is also facilitated by the gradual movement of the pressing punch, which allows gradual filling and thus gradual venting of the recess space. The gradual movement of the pressing punch may be a to-and-fro movement. Such to-and-fro movement may comprise a gradually inward and outward movement of the pressing punch.

In a method according to embodiments of the first aspect of the present invention, a marking may be provided in the plastics band between the interacting revolving elements, in the form of a notch or through-bore of the freshly extruded band, simultaneously between two successive projections, at regular spacing.

The notches may be spaced apart by a constant distance.

In a method according to embodiments of the first aspect of the present invention, the still soft plastic of the through-running band may fill the recesses for the formation of projections having at least one inner cavity.

Hereto, a pin may be provided on the periphery of one or both of the revolving elements, thus being pushed into the still soft plastic material. The pin would automatically be withdrawn from the formed plastics band due to the rotation of the revolving elements, thus forming a cavity, after cooling of the deformable plastics band.

In a second aspect, the present invention provides a device for implementing the method according to any of the embodiments of the first aspect. The device comprises an extrusion head having an extrusion gap and, downstream of the gap, a pair of interacting and cooled revolving revolving elements comprising a first and a second revolving element. At least the first revolving element comprises in its surface a series of suitable recesses for the formation of the said projections, and in each recess is located a pressing punch which is movable to and fro in a direction transversely to the surface. The device comprises control means for controlling the to-and-fro movement of the pressing punch so that a free space above a punch in the recesses in the revolving elements gradually increases from zero, with the onward rotation thereof from a starting point of a compression zone between the revolving elements to an end point just past the press nip of the through-running extruded band, so that the still soft plastic can there penetrate in a controlled manner into the recesses.

Preferably the extrusion head is a heated extrusion head.

Preferably the revolving elements have a substantially cylindrical outer surface, apart from one or more projections and/or one or more recesses, such that the band is substantially flat, except at predefined locations where a projection, or a blind hole, or a through hole is to be made in the plastics band.

It is an advantage that at least the first revolving element is actively or passively cooled, so that the plastics material leaving the extrusion gap and entering the space between the two revolving elements is still warm and weak, but gradually cools down and stiffens, such that it is not damaged when being pushed out of the recess.

It is an advantage of the control means that it provides a gradual increase of the recess space, rather than a large opening. This allows time for the plastics material to move into said recess under the pressure exerted by the revolving elements. This guarantees projections of very precise dimensions and shape, and suitable venting.

The use of recesses of variable depth below the surface of the second revolving element yields also the advantage that these recesses can be appropriately vented, as will be explained further. This increases the guarantee that the projections will always perfectly achieve their intended final form.

It is an advantage of the moving pressing punch in that it can be used to push the hardened plastics material out of the recess, so that pulling the material out of the recess can be avoided. This considerably reduces the risk of deformation and/or tearing and/or braking of the plastics band. In a device according to embodiments of the present invention, the pressing punch may be connected to a control pin for performing the to-and-fro movement of the pressing punch in its recess.

Preferably the control pin is oriented in a direction perpendicular to the movement of the pressing punch, parallel to the axis of the revolving elements, and extending on both sides of the revolving element, such that movement of the pressing punch can be controlled by driving or moving one or both ends of said control pin from the side of the revolving element. This allows cheap and elegant solutions, e.g. purely mechanical solutions to be used for driving the pressing punch.

A device according to embodiments of the present invention may further comprise:
- a suitable stationary cam-forming guideway arranged close to a side flank of at least the first revolving element,
- at least one bearing arranged for moving in said cam-forming guideway upon rotation of the first revolving element and for holding one end of the control pin,
- the at least one cam-forming guideway having a shape such that, upon rotation of the first revolving element, the at least one bearing makes said to-and-fro movement with respect to the first revolving element.

It is an advantage that the movement of the pressing punch(es) can be controlled by a stationary passive mechanical entity, namely the cam-forming guideway. The shape of the guideway defines a passageway, in which the bearing can roll as the revolving elements rotate. In this way, the angular position of the control pin is determined by the angular position of the revolving elements, but the radial position of the control pin and thus also the radial position of the pressing punch is determined by the shape of the guideway.

The outer surface of the revolving elements determines the position and size of the projections on the plastics band, while the shape of the guideway controls the timing and speed of movement of the punches. For a given surface of a revolving element, the skilled person can easily design a suitable guideway, taking into account the cooling of the band, for example by trial and error. Rather than moving the control pin in the guideway directly, it is an advantage of using one, preferably two bearings, in that such that the bearing(s) can hold the control pin while allowing rotation thereof, while the bearing itself can "roll" in the guideway path. In this way, wear is considerably reduced.

In a device according to embodiments of the present invention, the guideway may be mounted in such a way that said stationary position has an adjustable radial position and/or an adjustable angular position.

It is an advantage of mounting the guideway in such a way that its position and/or orientation can be adapted or fine-tuned. By doing so, the timing of pulling the pressing punch inwardly in the recess (for allowing the recess to be filled with plastics), and the timing of pushing the pressing punch outwardly (for ejecting the projections and thus the band when sufficiently cooled) can easily be fine-tuned, without having to modify the shape of the guideway itself.

In a device according to embodiments of the present invention, the interacting revolving revolving elements may be rollers.

In a device according to embodiments of the present invention, at least one upright tooth may be located on the surface of at least one of the revolving elements for applying a relief to a flat side of the band.

As the cooperating revolving elements rotate, the tooth will define a space not to be filled with plastics material, but it will be surrounded with plastics material, hence a notch or blind hole is formed, because the tooth has a length which does not reach towards the surface of the other one of the cooperating revolving elements.

It is advantageous if the tooth is slightly tapering or conical towards its top, as such a tooth can be more easily removed from the cooled plastics band.

The formed relief may comprise e.g. a notch or a blind hole in the plastics band.

In a device according to embodiments of the present invention, at least one upright pin on the surface of a first revolving element extends directly opposite the particular recess for the formation of projections having cavities. The upright pin on one revolving element is "arranged to meet" the particular recess on the other revolving element, when passing through the compression zone.

It is an advantage that a pin arranged in such a way will generate a projection with a "cavity on the opposite side", meaning that if the projection is visible from one side of the plastics band, the cavity is visible from the other side of the plastics band.

The pressing punch may bear in the particular recess an upright member, so that the cavities there comprise through-bores in projections transversely to the side faces of the band.

In contrast to the cavity produced by the "pin" as described in the previous embodiment, the "member" of this embodiment will create a projection with a "cavity on the same side as the projection", meaning that if the projection is visible from one side of the plastics band, the cavity is visible from the same side of the plastics band.

The skilled person can choose a suitable length of the "member" for forming either a blind hole or said through hole.

Optionally the second revolving element may comprise a corresponding pin or other kind of projection arranged so as to meet the member on the punch. In this way, the length of the member on the pressing punch can be decreased, and the risk of bending or breaking can be decreased, and the tolerances can be improved.

In a device according to embodiments of the present invention, the extrusion gap may have an increased transverse opening over at least part of its width for providing a plastics band with a locally increased thickness for the formation of a protruding continuous rib as a projection.

It is an advantage that the extrusion gap has an opening with a non-uniform height for making plastics bands such as those having an elongated rib, as this requires more plastics material at the location of the rib. By increasing the height of the extrusion gap only locally, it is avoided that the height is increased over its entire width, which would cause more waste.

In a device according to embodiments of the present invention, each of the revolving elements may possess recesses in its surface with pressing punches for the formation of projections on both sides of the plastics band.

This allows the production of a plastics band with projections on both sides.

Preferably in this case, the pressing punches of the second revolving element are mounted and controlled in the same manner as the punches of the first revolving element, e.g. by using a second stationary guideway mounted adjacent the second revolving element for guiding the control pins of said pressing punches.

In order to be able to realize projections with different shapes and/or volumes and with an appropriate distribution over the surface of the plastics band, the invention additionally in certain cases provides for the adoption of extrusion gaps having locally a larger transverse opening. This constitutes an additional interesting aspect of the versatility of the invention. In particular, the said transverse opening, at least at or close to the sites (for example of certain longitudinal strips in the band), distributed over the width of the extrusion gap, where the projections must be located, will be able to be larger for the formation there of protruding ribs, for example.

The device for implementing the above-described method comprises, in the first place, a heated extrusion head having a suitable extrusion gap. Downstream of the extrusion gap, the device is equipped with a pair of interacting and cooled revolving revolving elements. At least the first revolving element comprises in its surface a series of successive local recesses for the formation of the aforementioned projection islands. In each such recess there is a pressing punch which can be moved to and fro. This pressing punch is connected to means, for example to a control pin for the to-and-fro movement of the pressing punch in its recess. The control pin can extend via one or both of its free ends into a suitable cam-forming guideway. This guideway is mounted, for example, close to a side flank of the revolving element, but does not rotate along with the revolving elements. This characteristic provides a surprisingly versatile device, inter alia because, as a result of this mounting, an appropriate static, either variable or adjustable, cam-forming guideway can be used for any situation, as is explained below.

In a further not claimed aspect, the present invention provides a plastics band obtained with any of the methods according to embodiments of the present invention, the plastics band comprising a thermoplastic plastic harder than polyethylene, for instance a thermoplastic plastic material having a Young's modulus (modulus of elasticity) higher than 2.10⁹ N/m², such as e.g. polycarbonate.

It is advantageous to use a harder plastic, e.g. a plastic having a Young's modulus higher than 2.10⁹ N/m2, such as for instance polycarbonate, because such material is a relatively hard thermoplastic material. It is more resistant (than e.g. polyethylene) to undesired deformation or damage or scratches after its formation, e.g. during further use when making a passport or booklet, or the like.

A plastics band according to not claimed embodiments of the present invention may comprise a series of successive projection islands, each of which has a shape approximating to a truncated pyramid.

With "truncated pyramid-like shape" is meant a beam-shape with a rectangular cross-section in a plane parallel to the plastics band, and having inclined upright walls. It is an advantage of such shapes that they can be more easily removed from the recess, without being damaged during the removal.

A plastics band according to not claimed embodiments of the present invention may comprise, close to one of its longitudinal margins, at least one protruding rib.

It is an advantage of the rib that it improves the straightness of the plastics band. The rib may be formed on only one side of the plastics band, e.g. only on the top side, allowing the other side of the plastics band to be completely flat. Alternatively, the rib may be provided on both sides of the plastics band (i.e. both the top and bottom side).

While in embodiments of the present invention, the rib may be only provided on one edge, it is of course also possible to provide another rib on the other edge. This would further increase the stiffness and straightness of the plastics band still more.

A plastics band according to not claimed embodiments of the present invention may further comprise, at regular intervals over its length, markings obtained with a method according to embodiments of the present invention.

A plastics band according to not claimed embodiments of the present invention may further comprise a trail, applied by co-extrusion, of identification means.

A plastics band according to embodiments may be obtained with a method according to embodiments of the present invention, wherein the cavity is a notch or a through-bore in the particular projection.

The plastics band obtained with the method or device preferably comprises a relatively hard thermoplastic plastic, such as, for example, a plastics material with a Young's modulus higher than 2.10⁹ N/m², e.g. polycarbonate. With a view to certain applications in which the plastics band must be able to be connected, for example by ultrasonic welding, to other objects, the projections have a form, for example, which approximates to a truncated pyramid.

### Brief description of the drawings

All this will now be explained in greater detail with reference to an embodiment of the invention and in the light of the appended figures. Numerous important additional details and their advantages will here be explained. The protection is not, of course, limited to the embodiments described. Numerous variants thereof which are evident to the person skilled in the art are deemed to form a constituent part of the protection formulated and claimed in the appended claims.
FIG. 1 shows an example of a device according to embodiments of the present invention in front view. The device has two revolving elements, whereby only a first revolving element has recesses in its surface for acting as the forming wheel, the second revolving element being adapted for acting as counter-pressure wheel.
FIG. 2 illustrates to a cross-section of the device of FIG. 1.
FIG. 3 represents a guideway as can be used in the device of FIG. 1. The guideway is part of the means for controlling a to-and-fro movement of pressing punches, which are movably mounted in recesses in the peripheral face of at least the first revolving element, for providing a variable depth of said recesses.
FIG. 4 is a detailed view of a co-extrusion head and of the following press nip between the first and second revolving elements for the compression of the plastics band to be formed, as well as the use of a piercing tooth on the surface of a revolving element for the formation of a marking in the band.
FIG. 5 represents schematically an embodiment of the device for providing projections on both flat sides of the plastics band.
FIG. 6 sketches a configuration of successive recesses in the revolving element for notches as markings in the band surface and for cavities in the projections, in cross-section.
FIG. 7 illustrates in perspective view an example of a plastics band with projections, as can be obtained by a method according to embodiments of the present invention.

### Detailed description of illustrative embodiments

Where in the present document reference is made to a "relatively hard" or "harder plastic", reference is made to a plastic material "harder than polyethylene", e.g. a plastics material having a Young's modulus (modulus of elasticity) higher than 2.10⁹ N/m².

Where in the present invention reference is made to a "revolving element", reference is made to rolling means, such as rollers. These may include, but are not limited to, revolving means of transportation belts.

Where in the present invention reference is made to " an upright element or member" (in relation to a e.g. cylindrical surface), reference is made to such an element or member extending from said surface, e.g. perpendicular to that surface.

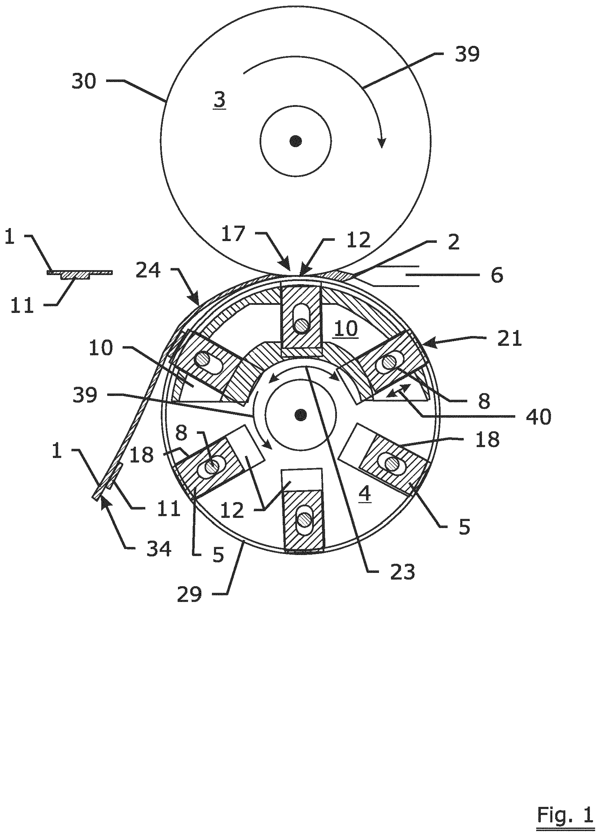

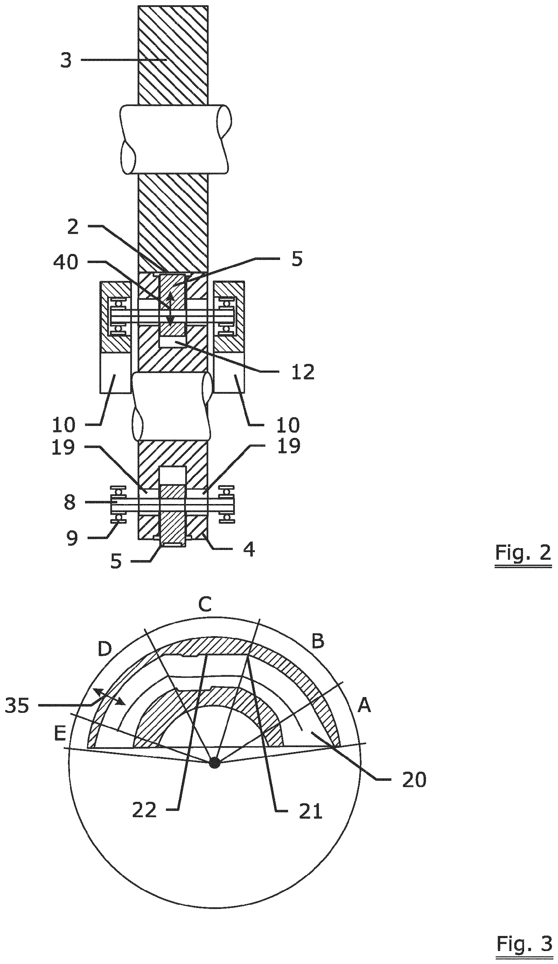

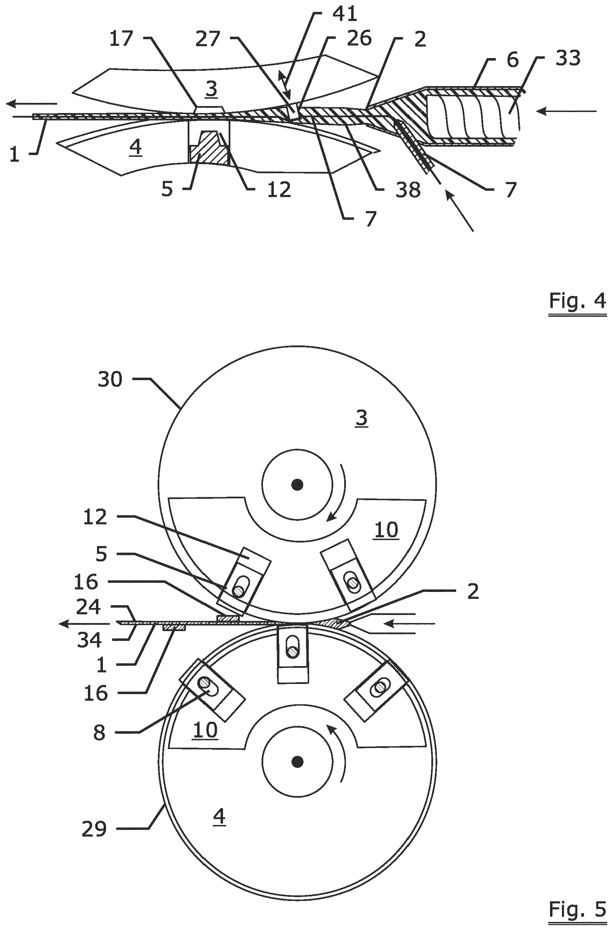

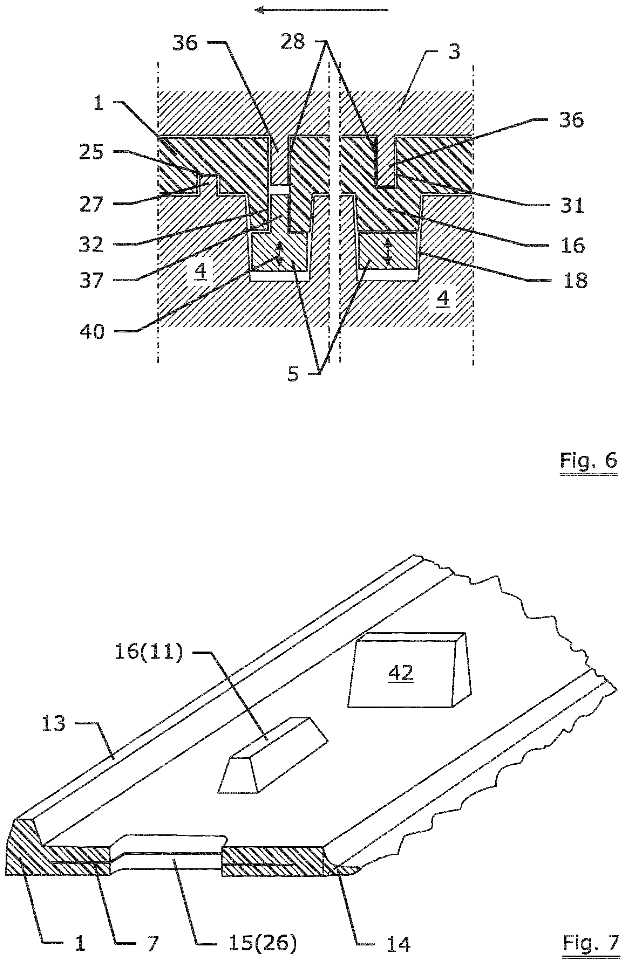

FIG. 1 and FIG. 2 show an example of a device according to embodiments of the present invention, the device having a first roller 4 and a second roller 3. The device according to FIG. 1 and FIG. 2 shows schematically the extrusion head 6 with the extrusion gap 2 close to the entrance of the press nip 17 of the cooled revolving elements 3 and 4 with the freshly extruded plastics band 38 (see also FIG. 4). The extrusion head 6 with heating means preferably possesses a pressing screw 33 for the melt which is to be extruded. Although other extrusion techniques, such as plunger extrusion may also be used, screw extrusion is generally more homogenous and better suited for relatively small volumes than plunger extrusion. The freshly extruded band 38 is on average thicker than the shortest distance (in the press nip 17) between the mutually opposing pressing surfaces 30, 29 of the revolving elements 3 and 4. The interacting revolving elements are here rollers 3, 4 which rotate with an opposite direction of rotation 39 and at the same peripheral speed. As an alternative, conveyor belts which interact in this way can also be used. The first roller 4 possesses in its surface 29 a series of successive suitable, virtually radially directed recesses 12 and it is thus the actual forming wheel for the projections 11, in particular for the projection islands 16 (see FIG. 7) on the bottom side 34 of the plastics band 1.

The second roller 3, acting as a counterpressure roller, compresses the freshly extruded band 38 transversally against the first roller 4 acting as forming roller. A part of the plastic is thus hereupon spread out somewhat over the width of the band 1 (in the depth direction of FIG. 1 and FIG. 5). This then generally results in the creation of undesirable (irregular) longitudinal margins 14 on the plastics band (see FIG. 7), which margins 14 then, further on in the process cycle, can be cut off in the direction of extrusion. At the same time, the second roller 3 presses a part of the plastic into the successive recesses 12 for the formation of the projections 11, 13, 16.

The suitable pressing punches 5 are placed in a radially displaceable manner in these recesses 12 (see FIG. 4). This displaceability is made possible by virtue of the fact that, between the inner wall of the recesses 12 and the outer wall of the pressing punches 5, minimum clearance gaps 18 are present as a sliding fit (see FIG. 6). These gaps 18 are particularly suitable for the venting of the recesses 12 as the plastic is pressed in for the formation of compact projections 11. After all, this venting very much promotes an accurate, completely leak-tight and unimpeded filling of the recesses 12. The venting occurs substantially via the outlet of the gaps 18 into the transverse passages 19 of the control pins 8 for the pressing punches 5 (see FIG. 2). On the left in FIG. 1 is shown a cross-section, perpendicular to the direction of passage of the formed band 1 with projection 11.

FIG. 1 to FIG. 6 show an example of a device according to the present invention, having a first roller 4 with six recesses 12, each recess 12 having a punch 5, but other embodiments can have more than six or less than six recesses 12. Figures 1, 2 and 3 illustrate the precise controlling of the radial to-and-fro displacement of the punches 5 in their recess 12. This happens with the aid of a stationary cam-forming guideway 10 positioned close to both side flanks of the first roller (forming wheel) 4. The transverse control pin 8 of each punch 5 slides, after all, via a bearing 9 at its free ends into the sliding slot of the guideway 10 and hereupon displaces the punches 5 radially to and fro in their recesses 12, as indicated by arrows 40 in FIG. 1 and FIG. 2.

FIG. 3 shows an example of a guideway 10 with a particular shape of its sliding slot, in this case having six segments A to F, but the invention is not limited thereto, and other sliding slots 43 are also possible, as long as the pin 8 makes an inward and an outward radial movement when moving through said sliding slot. Upon the rotation of the first roller 4 below the counterpressure roller 3, the recesses 12 pass successively through the segments A to F of the guideway 10, shown in FIG. 3. In the wide slot entrance 20 of the segment A, the punch 5 is displaced inwards (towards the roller axis) via its control pin 8, so that its top face is adjusted to the entry level 21 of the peripheral face 4 of the cooled roller 4. The punch 5 continues to rotate at this level through segment B. Upon entrance into the segment C, the radial distance of the punch 4 in the sliding slot gradually falls to its lowest level 22 with respect to the radius of the peripheral face 29 of the roller 4. The free space in the recess above the punch 5 hereupon increases for a gradual filling thereof with plastic for the formation of the desired projection 11. This measure promotes the realisation of a completely flat and even top side 24 of the band 1. In other words, local overloading and bulging plastics zones on the top side 24 are hereby avoided in the final band 1.

Towards the end of segment C, the guideway 10 forces the punches 5 back slightly outwards. It hereupon gradually forces the projections 11 out of their recesses 12 as a transitional step towards the segment D. In this segment D, the meanwhile definitively formed and sufficiently cooled and stiffened band 1 with its projections 11 is completely pushed away by the punches 5 of the roller 4 and removed from the surface 29 of the roller 4. Finally, the pin 8 of punch 5 in segment E leaves the guideway 10 and rotates freely through segment F until repeat of its cycle in segment A. The guideway 10 of FIG. 3 defines a path over an angle of about 180°, but the invention is not limited thereto, and the path defined by the guideway could also be more or less than 180°, and could even be 360°, because the radial position of the punches 5 in segment F of FIG. 3 is irrelevant for the formation of the plastics band 1.

It is an additional advantage of certain embodiments of the invention that the guideway 10 can be statically fixedly mounted in various adjustable and variable angular displacement positions as suggested with arrow 23 in FIG. 1. In particular embodiments, the angular displacement of the guideway 10 can be adjusted, even with a slightly varying angular displacement (to and fro) during operation. It is also possible to adjust the radial position 35 of the guideway 10 inwards or outwards. As a result, the desired depth of the recesses 12, and thus the required height of the projections 11, 16, can be readjusted. This extra flexibility gives the device a major practical advantage, as it allows precise fine-tuning of the height of the projections 11. Another advantage of using a guideway 10 for controlling the movement of the punches 5 in the recesses 12, is that it allows the same roller 4 to be used for producing different plastics bands 1, in particular, plastics bands having the same position of the projections 11 (defined by the position of the recesses 12 on the surface 29), but a different height of the projections. In summary, the very advantageous and flexible arrangement of the guideway 10 and pressing punches 5, which are adjustably movable to and fro, in recesses 12 thus fulfils three simultaneous functions. Firstly, there is the very advantageous controllable gradual filling of the recesses 12 to very precise projections, e.g. with a tolerance smaller than 0.01 mm, for instance between 5 µm and 10µm, and secondly there is an improved venting of these recesses 12, and thirdly, the arrangement affords the neat ejection (release) of, inter alia, the precisely formed projection islands 16, so that these are not damaged during the release and removal of the plastics band 1 from the first roller 4.

In FIG. 4, the co-extrusion is shown with at least one more or less central, e.g. central, continuous or not (for example UV-sensitive) identification strip(s) 7 in the band 1. This/these strip(s) 7 may comprise suitable additional materials and/or structures, for example for identification or recognition via scanning of the produced band 1. These materials can comprise dyes, magnetic substances, metal powders, pigments, etc. The strips can comprise a continuous or discontinuous or striped pattern.

FIG. 4 sketches also the adoption of the simultaneous provision of successive markings 15 (see e.g. FIG. 7) between two successive projection islands 16 in the band 1. With the aid of at least one fixed or movable upright tooth 27 on the surface 30 and/or 29 of the first and/or second roller 4, 3, successive through-holes or through-bores 26 can be forced through the band 1 as markings 15. These markings 15 may for example be provided over regular distance intervals, equal to a fraction of the perimeter, or the entire perimeter of the first resp. second roller 4, 3. To this end, the length of the tooth 27 will have to be approximately equal to the distance between the roller surfaces 29 and 30 in the press nip 17. The still soft plastics, upstream of the nip 17, is forced between the roller surfaces around this tooth 27 and thus forms a through-bore 26 in the band 1 as a marking 15 in addition to the projections 11. This through-bore 26 can be useful as a reference point over the length of the band 1 for further applications or treatments of the band 1. Of course, a plurality of such teeth 27 may be provided on the roller periphery 30 and/or 29, for example at equal distances apart. In place of a through-bore 26 in the freshly extruded band 38 (FIG. 4), an appropriate notch or groove 25 (see FIG. 6) may also suffice. The upright tooth 27 (in FIG. 4) may also be arranged so to move inward and outwards (see arrow 41 in FIG. 4) of the roller surface 29, 30, e.g. in a radial direction, e.g. by means of a spring.

FIG. 5 shows schematically the situation in which projections 16, are provided on both sides (first side 34 and second side 24) of the band 1, e.g. in a staggered or alternating manner, but other configurations are also possible. In that case, each of the rollers 3, 4 are then forming wheels, each having suitable recesses 12 and pressing punches 5 in their surface 30, 29, as described above.

FIG. 6 illustrates two examples of a cross-section of the cooperating rollers 4, 3 taken in an imaginary plane passing through both roller axes. These examples on the left and the right of FIG. 6 may be cross-sections taken at different angular positions of the rollers 4, 3. In the specific examples of FIG. 6, two situations are illustrated for the simultaneous additional provision of cavities or through-bores 26 in the projections 16 of the band 1, which are applied simultaneously with the actual forming of these projections 16 from the still soft plastic 38 between the rollers 3 and 4. To this end, at suitable sites on the surface 30 of the roller 3, pins 36 oriented perpendicular to the surface 30 are provided. These pins 36 extend from one of the rollers, e.g. the second roller 3, and are arranged to be positioned in the contact nip 17 directly opposite a recess 12 in the surface 29 of the roller (forming wheel) 4, when passing through the compression zone. During the rotation of the interacting rollers 3 and 4, the still soft plastic present in the nip 17 is forced to fill the recess 12 for the formation of a projection 16. At the same time, the still soft plastic is also forced to flow around the pin 36 and to hereby form a notch or depression 31 as a cavity 28 in the bottom of the projection 16. This is sketched in the right half of FIG. 6.

As shown in the left half of FIG. 6, the pressing punch 5 of the first roller 4 itself may also bear a suitable upright member 37 which extends directly opposite the pin 36 of the second roller 3. The length of the pin 36 and the length of the upright member 37 may be chosen such that a through-hole or through-opening 32 can be realized in the projection 16.

Further to the left of the left part of FIG. 6, also another example of the realization of a marking 15 is illustrated, in the form of a notch 25 or a blind hole. To this end, an upright tooth 27 is provided in the surface 29 of the first roller 4, having a length shorter than the shortest distance between the two contact surfaces 29, 30. The skilled person can select a suitable length and/or position of the tooth 27 depending on the desired marking, e.g. through hole or blind hole.

Finally, FIG. 7 shows in perspective view an example of a plastics band 1 having a plurality of projection islands 16 (only one being shown), on the one hand, and a continuous rib-forming strip 13, on the other hand. The projections 16 were formed in the recesses 12 on the first roller 4. The projection islands 16 can have a specific shape for example a beam with inclined walls resembling a truncated and elongated pyramid.. This virtually pyramidal shape very much promotes the easy ejection (release) of the projections 11, 13, 16 from the recesses 12 in which they were formed, without damaging them. The rib 13 can markedly contribute to the required straightness of the band 1.

Self-evidently, the invention permits innumerable variant embodiments of the plastics band in accordance with the specific requirements of shape and characteristics for the plastics band. Apart from polycarbonate (PC) as the base material for the band 1, as an example of a harder (engineering) plastic, for example, polysulphone (PS), polyetherimide (PEI) or polyethersulphone (PES), or even plastic filled with glass fibre, can also be used. The dimensions of the plastics band 1 and its projections 11, 13, 16 are, for example, of the order of magnitude described in relation to Figures 1 to 4 in EP 1008459. For example, the thickness of the band 1 may be between 0.10 mm and 0.90 mm, for example lie in the range of 0.76 mm +/- 0.08 mm, or lie in the range of 0.10 mm to 0.40 mm. Instead of a cam-forming guideway 10, as shown in Figures 1 to 3, for the controlling of the control pin 8 for the pressing punches 5 a control system with electric servo motor, or an appropriate pneumatic or hydraulic control system, can be used.

If it is wished, for example, to temporarily join a polycarbonate (PC) band 1 to a polypropylene (PP) strip to form a combined band, as can be used for application in passports or other ID's in the shape of a book, such as booklets for recording medical data and the like,, then, apart from projections 11, 16, 13, at regular intervals, a second group of somewhat higher projections 42 (see FIG. 7) can also be used as a marking 15. If the PC band 1 is joined to the PP strip, the top edge of the projection 42 then projects above the outer face of this PP strip through a corresponding (previously punched) opening, situated opposite the projection 42, in this PP strip. Following appropriate heating, this top edge can there be pressed (as a sort of rivet) over the rims of this opening onto the outer face in the PP strip (also known as heat staking). In this way, a combined band is realized from, for example, a plastics band 1 (PC) which is connected to a PP strip at local sites (at the location of the projections 42) at regular spacings over the length of the combined band. Following joining (for example by ultrasonic welding) of the outer face of the PP strip of the combined band to, for example, a PC substrate, these local connection sites can subsequently be cut out as waste.

### REFERENCES:

1 plastics band
2 extrusion gap
3 second revolving element (e.g. second roller; counter-pressure revolving element, pressure wheel)
4 first revolving element (e.g. first roller, forming wheel)
5 pressing punch (e.g. release slide)
6 extrusion head (e.g. coaxial)
7 identification means (e.g. identifiable via UV)
8 control pin of punch 5
9 bearing
10 guideway for the control pin (e.g. static cam)
11 projection(s)
12 recess(es) in surface of first roller
13 protruding ribs (as example of projection)
14 longitudinal edge of plastic band
15 marking in 1 (e.g. positioning opening)
16 projection island (as example of projection)
17 compression zone between first and second roller
18 clearance gap between pressing punch and recess (to allow slide fit)
19 transverse passage of control pin
20 slot entrance of guideway
21 entry level of pressing punch in a predefined segment (e.g. segment C)
22 lowest level of pressing punch in a predefined segment (e.g. segment C)
23 arrow indicating a variable angular displacement of the guideway.
24 top side of the band
25 notch in the band
26 through-hole in the band (e.g. through-opening, through bore)
27 tooth extending from the surface of a first/second revolving element
28 cavity in a projection
29 first surface, (surface of first roller)
30 second surface, (surface of second roller)
31 notch as cavity
32 through-bore as cavity
33 extrusion screw
34 first side of band
35 arrow indication radially adjustable position of the guideway
36 pin extending from second surface opposite a recess in first surface
37 vertical member on 5
38 freshly extruded band
39 arrow indicating direction of rotation of first and second roller
40 arrow indicating direction of the to-and-fro movement of the pressing punch
41 arrow indicating the direction of movement of tooth
42 projection with a second height, higher than a first height.

## Claims

1. Method for extruding a plastics band (1) through an extrusion gap (2) and for next continuously applying a precise relief of plastics projections (11, 16) in at least one flat side (24,34) of the band (1), comprising the steps:
- feeding-through of a still soft plastic material in the form of a freshly extruded band (38) between a pair of interacting and cooled revolving elements (3, 4) comprising a first and a second revolving element (4, 3), whereof at least the first revolving element (4), at a location of the projections (11, 16) to be provided on the at least one said flat side (24, 34), possesses suitable recesses (12) in its surface (29), wherein the still soft plastic material of the through-running freshly extruded band (38) can penetrate into these recesses and can fill them;
- wherein, downstream of the thus filled recesses (12), the revolving elements (3, 4) further transversely compress the extruded band (38) in order to obtain the plastics band (1) having a desired final form with a precise relief of the projections (11, 16);
- wherein the formed plastics band (1) is subsequently led onward and cooled,
- and wherein a free space above punches (5) in the recesses (12) in the revolving elements (3,4) gradually increases from zero, with the onward rotation thereof from a starting point of a compression zone between the revolving elements (3, 4) to an end point just past the press nip (17) of the through-running extruded band (38) by movement of the punches (5) in the recesses (12), so that the still soft plastic can there penetrate in a controlled manner into the recesses (12).

2. Method according to claim 1, wherein, downstream of the filled recesses (12), the free space above the punches (5) in the said recesses (12) gradually decreases upon the further rotation of the revolving elements (4, 3) for a correct ejection of the formed projections (11, 16) from the surface (29, 30) of the revolving elements (4, 3) for the removal of the band (1) having the desired final form.

3. Method according any of the previous claims, wherein, downstream of the filled recesses (12), the free space above the punches (5) in the said recesses (12) gradually decreases upon the further rotation of the revolving elements (4, 3) for a correct ejection of the formed projections (11, 16) from the surface (29, 30) of the revolving elements (4, 3) for the removal of the band (1) having the desired final form.

4. Method according to any of the previous claims, wherein, during extrusion, identification means (7) for the band (1) are added to the still soft plastics material.

5. Method according to any of the previous claims, wherein, during the formation of the said projections (11), the recesses (12) are appropriately vented.

6. Method according to any of the previous claims, wherein the still soft plastic of the through-running band (1) fills the recesses (12) for the formation of projections (11, 13, 16) having at least one inner cavity (28).

7. Device for implementing the method according to any of the previous claims, the device comprising an extrusion head (6) having an extrusion gap (2) and, downstream of the gap (2), a pair of interacting and cooled revolving elements (3, 4) comprising a first and a second revolving element (4, 3);
- wherein at least the first revolving element (4) comprises in its surface (29) a series of suitable recesses (12) for the formation of the said projections (11), and
- wherein in each recess (12) is located a pressing punch (5) which is movable to and fro in a direction (40) transversely to the surface (29), and
- **characterized in that** the device comprises control means (8, 9, 10) for controlling the to-and-fro movement of the pressing punch (5) so that a free space above a punch (5) in the recesses (12) in the revolving elements (3, 4) gradually increases from zero, with the onward rotation thereof from a starting point of a compression zone between the revolving elements (3, 4) to an end point just past the press nip (17) of the through-running extruded band (38), so that the still soft plastic can there penetrate in a controlled manner into the recesses (12).

8. Device according to Claim 7, wherein the pressing punch (5) is connected to a control pin (8) for performing the to-and-fro movement of the pressing punch (5) in its recess.

9. Device according to Claim 8, further comprising:
- a suitable stationary cam-forming guideway (10) arranged close to a side flank of at least the first revolving element (4),
- at least one bearing (9) arranged for moving in said cam-forming guideway (10) upon rotation of the first revolving element (4) and for holding one end of the control pin (8),
- the at least one cam-forming guideway (10) having a shape such that, upon rotation of the first revolving element (4), the at least one bearing (9) makes said to-and-fro movement with respect to the first revolving element (4).

10. Device according to Claim 9, wherein the guideway (10) is mounted in such a way that said stationary position has an adjustable radial position (35) and/or an adjustable angular position (23).

11. Device according to any of the claims 7 to 10, wherein at least one upright pin (36) on the surface (30) of a first revolving element (3) extends directly opposite the particular recess (12) for the formation of projections (11) having cavities (28).

12. Device according to any of the claims 7 to 11, wherein the extrusion gap (2) has an increased transverse opening over at least part of its width for providing a plastics band (38) with a locally increased thickness for the formation of a protruding continuous rib (13) as a projection (11).

13. Device according to claims 7 to 12, wherein each of the revolving elements (3, 4) possesses recesses (12) in its surface (29, 30) with pressing punches (5) for the formation of projections (11, 13,16) on both sides (24, 34) of the plastics band (1).

14. Plastics band (1) obtained with any of the methods according to claim 1 to 6, wherein the plastics band comprises a top side and a bottom side, the bottom side being provided with a projection (11) and **characterized in that** the top side at the location of the projection (11) is flat and even.

15. Plastics band (1) according to claim 14, comprising a thermoplastic plastic harder than polyethylene, such as polycarbonate.

## Patentansprüche

1. Verfahren zum Extrudieren eines Kunststoffbandes (1)durch einen Extruderspalt (2) und zum anschließenden kontinuierlichen Aufbringen eines präzisen Reliefs von Kunststoffvorsprüngen (11, 16) in mindestens einer flachen Seite (24,34) des Bandes (1), umfassend die folgenden Schritte:
- Durchführen eines noch weichen Kunststoffmaterials in der Form eines frisch extrudierten Bandes (38)zwischen einem Paar von wechselwirkenden und gekühlten Drehelemente (3, 4), die ein erstes und ein zweites Drehelement umfassen (4, 3), wovon mindestens das erste Drehelement (4), an einer Stelle der Vorsprünge (11, 16), die auf mindestens einer flachen Seite (24, 34) bereitzustellen sind, geeignete Aussparungen (12) in seiner Oberfläche (29) besitzt, wobei das noch weiche Kunststoffmaterial des durchlaufenden frisch extrudierten Bandes (38) in diese Aussparungen eindringen kann und sie füllen kann;
- wobei, stromabwärts der so gefüllten Aussparungen (12), die Drehelemente (3, 4) das extrudierte Band (38) weiter transversal komprimieren, um das Kunststoffband (1) zu erhalten, das eine gewünschte finale Form mit einem präzisen Relief der Vorsprünge (11, 16) aufweist;
- wobei das geformte Kunststoffband (1) anschließend weitergeleitet und gekühlt wird,
- und wobei ein freier Raum oberhalb von Stempeln (5) in den Aussparungen (12) in den Drehelementen (3, 4) sich allmählich von Null vergrößert, mit der Weiterrotation davon von einem Startpunkt einer Komprimierungszone zwischen den Drehelementen (3, 4) zu einem Endpunkt gerade hinter dem Pressnip (17) des durchlaufenden extrudierten Bandes (38) durch Bewegung der Stempel (5) in den Aussparungen (12), damit der noch weiche Kunststoff dort in einer gesteuerten Weise in die Aussparungen (12) eindringen kann.

2. Verfahren nach Anspruch 1, wobei, stromabwärts der gefüllten Aussparungen (12), der freie Raum oberhalb der Stempel (5) in den Aussparungen (12) bei der weiteren Rotation der Drehelemente (4, 3) zu einem korrekten Auswerfen der geformten Vorsprünge (11, 16) von der Oberfläche (29, 30) der Drehelemente (4, 3) zur Entfernung des Bandes (1), das die gewünschte finale Form aufweist, sich allmählich verkleinert.

3. Verfahren nach einem der vorstehenden Ansprüche, wobei, stromabwärts der gefüllten Aussparungen (12), der freie Raum oberhalb der Stempel (5) in den Aussparungen (12) bei der weiteren Rotation der Drehelemente (4, 3) zu einem korrekten Auswerfen der geformten Vorsprünge (11, 16) von der Oberfläche (29, 30) der Drehelemente (4, 3) zur Entfernung des Bandes (1), das die gewünschte finale Form aufweist, sich allmählich verkleinert.

4. Verfahren nach einem der vorstehenden Ansprüche, wobei, während einer Extrusion, dem noch weichen Kunststoffmaterial Identifikationsmittel (7) für das Band (1) hinzugefügt werden.

5. Verfahren nach einem der vorstehenden Ansprüche, wobei, während des Formens der Vorsprünge (11) die Aussparungen (12) angemessen belüftet sind.

6. Verfahren nach einem der vorstehenden Ansprüche, wobei das noch weiche Kunststoffmaterial des durchlaufenden Bandes (1) die Aussparungen (12) zum Formen von Vorsprüngen (11, 13, 16) ausfüllt, die mindestens einen inneren Hohlraum (28) aufweisen.

7. Vorrichtung zum Implementieren des Verfahrens nach einem der vorstehenden Ansprüche, wobei die Vorrichtung einen Extruderkopf (6), der einen Extruderspalt (2) und, stromabwärts des Spaltes (2), ein Paar von wechselwirkenden und gekühlten Drehelementen (3, 4) umfasst, die ein erstes und ein zweites Drehelement (4, 3) umfassen;
- wobei mindestens das erste Drehelement (4) in seiner Oberfläche (29) eine Reihe von geeigneten Aussparungen (12) zum Formen der Vorsprünge (11) umfasst, und
- wobei sich in jeder Aussparung (12) ein Pressstempel (5) befindet, der hin und her in einer Richtung (40) transversal zur Oberfläche (29) beweglich ist, und
- **dadurch gekennzeichnet, dass** die Vorrichtung Steuermittel (8, 9, 10) zur Steuerung der Hin- und Herbewegung des Pressstempels (5) umfasst, damit ein freier Raum oberhalb eines Stempels (5) in den Aussparungen (12) in den Drehelementen (3, 4) sich allmählich von Null vergrößert, mit der Weiterrotation davon von einem Startpunkt einer Komprimierungszone zwischen den Drehelementen (3, 4) zu einem Endpunkt gerade hinter dem Pressnip (17) des durchlaufenden extrudierten Bandes (38), damit der noch weiche Kunststoff dort in einer gesteuerten Weise in die Aussparungen (12) eindringen kann.

8. Vorrichtung nach Anspruch 7, wobei der Pressstempel (5) mit einem Steuerpin (8) zum Ausführen der Hin- und Herbewegung des Pressstempels (5) in seiner Aussparung verbunden ist.

9. Vorrichtung nach Anspruch 8, weiter umfassend:
- eine geeignete ortsfeste nockenformende Führungsbahn (10), die nahe bei einer Seitenflanke von mindestens dem ersten Drehelement (4) angeordnet ist,
- mindestens ein Lager (9), das zum Bewegen in der nockenformenden Führungsbahn (10), bei Rotation des ersten Drehelements (4), und zum Halten eines Endes des Steuerpins (8) angeordnet ist,
- wobei die mindestens eine nockenformende Führungsbahn (10) eine Gestalt aufweist, sodass, bei Rotation des ersten Drehelements (4), das mindestens eine Lager (9) die Hin- und Herbewegung in Bezug zum ersten Drehelement (4) macht.

10. Vorrichtung nach Anspruch 9, wobei die Führungsbahn (10) derart befestigt ist, dass die ortsfeste Position eine einstellbare radiale Position (35) und/oder eine einstellbare winkelmäßige Position (23) aufweist.

11. Vorrichtung nach einem der Ansprüche 7 bis 10, wobei sich mindestens ein aufrechter Pin (36) auf der Oberfläche (30) eines ersten Drehelements (3) direkt gegenüber der jeweiligen Aussparung (12) zum Formen von Vorsprüngen (11) erstreckt, die Hohlräume (28) aufweisen.

12. Vorrichtung nach einem der Ansprüche 7 bis 11, wobei der Extruderspalt (2) eine vergrößerte transversale Öffnung über mindestens einem Teil seiner Breite zum Bereitstellen eines Kunststoffbandes (38) mit einer lokal vergrößerten Dicke zum Formen einer vorstehenden durchgehenden Rippe (13) als ein Vorsprung (11) aufweist.

13. Vorrichtung nach einem der Ansprüche 7 bis 12, wobei jedes der Drehelemente (3, 4) Aussparungen (12) in seiner Oberfläche (29, 30) mit Pressstempeln (5) zum Formen von Vorsprüngen (11, 13, 16) auf beiden Seiten (24, 34) des Kunststoffbandes (1) besitzt.

14. Kunststoffband (1), erhalten mit einer der Verfahren nach Anspruch 1 bis 6, wobei das Kunststoffband eine Oberseite und eine Unterseite umfasst, wobei die Unterseite mit einem Vorsprung (11) bereitgestellt und **dadurch gekennzeichnet ist, dass** die Oberseite an der Stelle mit dem Vorsprung (11) flach und eben ist.

15. Kunststoffband (1) nach Anspruch 14, umfassend einen thermoplastischen Kunststoff, der härter als Polyethylen, wie Polycarbonat, ist.

## Revendications

1. Procédé permettant d'extruder une bande de matière plastique (1) au travers d'une fente d'extrusion (2) et d'appliquer ensuite de manière continue un relief précis de saillies de matière plastique (11, 16) sur au moins un côté plat (24,34) de la bande (1), comprenant les étapes suivantes :
- introduction continue d'une matière plastique encore molle sous la forme d'une bande fraîchement extrudée (38) entre une paire d'éléments tournants en interaction et refroidis (3, 4) comprenant un premier et un second élément tournant (4, 3), dont au moins le premier élément tournant (4) possède, à un emplacement des saillies (11, 16) à prévoir sur ledit au moins un côté plat (24, 34), des évidements adaptés (12) à sa surface (29), la matière plastique encore molle de la bande fraîchement extrudée en passage continu (38) pouvant pénétrer dans ces évidements et pouvant les remplir ;
- dans lequel, en aval des évidements ainsi remplis (12), les éléments tournants (3, 4) compriment en outre transversalement la bande extrudée (38) afin d'obtenir la bande de matière plastique (1) présentant une forme définitive souhaitée avec un relief précis des saillies (11, 16) ;
- dans lequel la bande de matière plastique formée (1) est ensuite avancée et refroidie,
- et dans lequel un espace libre situé au-dessus de poinçons (5) dans les évidements (12) des éléments tournants (3, 4) augmente progressivement à partir de zéro, avec la rotation vers l'avant desdits éléments depuis un point de départ d'une zone de compression entre les éléments tournants (3, 4) jusqu'à un point d'arrivée juste après l'interstice de pressage (17) de la bande extrudée en passage continu (38) par le mouvement des poinçons (5) dans les évidements (12), de sorte que la matière plastique encore molle peut, à cet endroit, pénétrer de manière contrôlée dans les évidements (12).

2. Procédé selon la revendication 1, dans lequel, en aval des évidements remplis (12), l'espace libre situé au-dessus des poinçons (5) dans lesdits évidements (12) diminue progressivement au fur et à mesure que les éléments tournants (4, 3) poursuivent leur rotation pour assurer une éjection correcte des saillies formées (11, 16) de la surface (29, 30) des éléments tournants (4, 3) pour le retrait de la bande (1) présentant la forme définitive souhaitée.

3. Procédé selon l'une quelconque des revendications précédentes, dans lequel, en aval des évidements remplis (12), l'espace libre situé au-dessus des poinçons (5) dans lesdits évidements (12) diminue progressivement au fur et à mesure que les éléments tournants (4, 3) poursuivent leur rotation pour assurer une éjection correcte des saillies formées (11, 16) de la surface (29, 30) des éléments tournants (4, 3) pour le retrait de la bande (1) présentant la forme définitive souhaitée.

4. Procédé selon l'une quelconque des revendications précédentes, dans lequel, pendant l'extrusion, des moyens d'identification (7) pour la bande (1) sont ajoutés à la matière plastique encore molle.

5. Procédé selon l'une quelconque des revendications précédentes, dans lequel, pendant la formation desdites saillies (11), les évidements (12) sont ventilés de manière appropriée.

6. Procédé selon l'une quelconque des revendications précédentes, dans lequel la matière plastique encore molle de la bande en passage continu (1) remplit les évidements (12) pour la formation de saillies (11, 13, 16) ayant au moins une cavité interne (28).

7. Dispositif permettant la mise en oeuvre du procédé selon l'une quelconque des revendications précédentes, le dispositif comprenant une tête d'extrusion (6) dotée d'une fente d'extrusion (2) et, en aval de la fente (2), une paire d'éléments tournants en interaction et refroidis (3, 4) comprenant un premier et un second élément tournant (4, 3) ;
- dans lequel au moins le premier élément tournant (4) comprend à sa surface (29) une série d'évidements adaptés (12) pour la formation desdites saillies (11), et
- dans lequel dans chaque évidement (12) se trouve un poinçon de pressage (5) qui est mobile en va-et-vient dans une direction (40) perpendiculairement à la surface (29), et
- **caractérisé en ce que** le dispositif comprend des moyens de commande (8, 9, 10) permettant de contrôler le mouvement de va-et-vient du poinçon de pressage (5) de sorte qu'un espace libre au-dessus d'un poinçon (5) dans les évidements (12) des éléments tournants (3, 4) augmente progressivement à partir de zéro, avec la rotation vers l'avant desdits éléments depuis un point de départ d'une zone de compression entre les éléments tournants (3, 4) jusqu'à un point d'arrivée juste après l'interstice de pressage (17) de la bande extrudée en passage continu (38), de sorte que la matière plastique encore molle peut, à cet endroit, pénétrer de manière contrôlée dans les évidements (12).

8. Dispositif selon la revendication 7, dans lequel le poinçon de pressage (5) est relié à une broche de commande (8) pour opérer le mouvement de va-et-vient du poinçon de pressage (5) dans son évidement.

9. Dispositif selon la revendication 8, comprenant en outre :
- une glissière adaptée fixe formant came (10) agencée à proximité d'un flanc latéral au moins du premier élément tournant (4),
- au moins un palier (9) conçu pour se déplacer dans ladite glissière formant came (10) lors de la rotation du premier élément tournant (4) et pour maintenir une extrémité de la broche de commande (8),
- l'au moins une glissière formant came (10) présentant une forme telle que, lors de la rotation du premier élément tournant (4), l'au moins un palier (9) effectue ledit mouvement de va-et-vient par rapport au premier élément tournant (4).

10. Dispositif selon la revendication 9, dans lequel la glissière (10) est montée d'une manière telle que ladite position fixe comporte une position radiale réglable (35) et/ou une position angulaire réglable (23).

11. Dispositif selon l'une quelconque des revendications 7 à 10, dans lequel au moins une broche verticale (36) à la surface (30) d'un premier élément tournant (3) s'étend directement à l'opposé de l'évidement particulier (12) pour la formation de saillies (11) dotées de cavités (28).

12. Dispositif selon l'une quelconque des revendications 7 à 11, dans lequel la fente d'extrusion (2) comporte une ouverture transversale élargie sur au moins une partie de sa largeur pour fournir une bande de matière plastique (38) dotée d'une épaisseur localement plus importante pour la formation d'une nervure continue saillante (13) comme saillie (11).

13. Dispositif selon les revendications 7 à 12, dans lequel chacun des éléments tournants (3, 4) possède des évidements (12) à sa surface (29, 30) avec des poinçons de pressage (5) pour la formation de saillies (11, 13, 16) des deux côtés (24, 34) de la bande de matière plastique (1).

14. Bande de matière plastique (1) obtenue avec l'un quelconque des procédés selon les revendications 1 à 6, dans laquelle la bande de matière plastique comprend une face supérieure et une face inférieure, la face inférieure étant pourvue d'une saillie (11) et **caractérisée en ce que** la face supérieure, à l'emplacement de la saillie (11), est plate et régulière.

15. Bande de matière plastique (1) selon la revendication 14, comprenant une matière plastique thermoplastique plus dure que le polyéthylène, telle que le polycarbonate.
